Europäisches Patentamt

European Patent Office

Office européen des brevets

(11) Veröffentlichungsnummer: **0 262 609**
**A2**

(12) **EUROPÄISCHE PATENTANMELDUNG**

(21) Anmeldenummer: 87114043.0

(22) Anmeldetag: 25.09.87

(51) Int. Cl.4: **H04L 7/02**

(30) Priorität: 30.09.86 DE 3633225

(43) Veröffentlichungstag der Anmeldung:
06.04.88 Patentblatt 88/14

(84) Benannte Vertragsstaaten:
AT BE CH DE ES FR GB IT LI NL SE

(71) Anmelder: **Siemens Aktiengesellschaft Berlin und München**
**Wittelsbacherplatz 2**
**D-8000 München 2(DE)**

(72) Erfinder: **Haas, Peter**
**Am Hof 14**
**D-8059 Walpertskirchen(DE)**

(54) **Digitaler Phasenregelkreis.**

(57) Zum phasenstarren Synchronisieren von Datenimpulsen (DI) und Datentakten (D) ist ein Zähler (Z) vorgesehen, der durch Taktimpulse (T) konstanter Folgefrequenz von jeweils einem veränderbaren Anfangswert bis zu einem konstanten Endwert gezählt wird. Der Anfangswert wird in Abhängigkeit von dem Zählerstand beim Eintreffen eines Datenimpulses (DI) solange verändert, bis die gewünschte Phasenbeziehung zwischen den Datenimpulsen (DI) und den Datentakten (D) vorhanden ist. Wenn der Datenimpuls (DI) beim Anfangswert oder beim Endwert eintrifft, wird der Anfangswert nicht verändert.

## FIG 4

EP 0 262 609 A2

## Digitaler Phasenregelkreis

Die Erfindung bezieht sich auf einen digitalen Phasenregelkreis gemäß dem Oberbegriff des Patentanspruchs 1.

Es ist bereits allgemein bekannt, zum Erzeugen von Datentakten, die phasenmäßig mit Datenimpulsen synchronisiert sind, einen digitalen Phasenregelkreis zu verwenden. Ein derartiger Phasenregelkreis ist beispielsweise aus der DE-OS 20 13 880 bekannt. Bei diesem digitalen Phasenregelkreis ist ein Zähler vorgesehen, der ständig von einem konstanten Anfangswert bis zu einem veränderbaren Endwert hochgezählt wird. In Abhängigkeit von dem augenblicklichen Zählerstand beim Eintreffen eines Datenimpulses wird jeweils ein neuer Endwert berechnet und beim Erreichen des neuen Endwerts wird der Zähler wieder auf seinen Anfangswert zurückgesetzt und gleichzeitig wird ein Datentakt abgegeben.

Dieser bekannte digitale Phasenregelkreis erfordert einen verhältnismäßig großen Aufwand, da er außer dem Zähler einen Speicher zum Speichern des augenblicklichen Zählerstands beim Eintreffen eines Datenimpulses, ein Rechenwerk zum Berechnen des Endwerts und einen Vergleicher zum Vergleichen des jeweiligen Zählerstands mit dem berechneten Endwert erfordert.

Der Erfindung liegt daher die Aufgabe zugrunde, einen digitalen Phasenregelkreis anzugeben, der einen äußerst geringen Aufwand erfordert und der dennoch eine zuverlässige Erzeugung von Datentakten ermöglicht, die phasenmäßig mit empfangenen Datenimpulsen synchronisiert sind.

Erfindungsgemäß wird die Aufgabe bei dem digitalen Phasenregelkreis der eingangs genannten Art durch die im kennzeichnenden Teil des Patentanspruchs 1 angegebenen Merkmale gelöst.

Der Phasenregelkreis gemäß der Erfindung hat den Vorteil, daß er infolge einer geringen Anzahl von Bauelementen für hohe Übertragungsgeschwindigkeiten geeignet ist. Er ist unempfindlich gegen kurzzeitige Flankenverschiebungen der Datenimpulse (Jitter) und ermöglicht ein verhältnismäßig schnelles Einphasen der Datentakte.

Der Phasenregelkreis erfordert einen besonders geringen Aufwand, wenn sein Anfangswert jeweils nur um eine Zähleinheit verstellbar ist. Es wäre jedoch auch denkbar, den Anfangswert in Abhängigkeit von dem Zählerstand beim Eintreffen eines Datenimpulses um einen oder mehrere Zähleinheiten zu verändern.

Das Verlängern des Zählbereichs erfolgt auf einfache Weise dadurch, daß der Zähler beim Erreichen seines Endwerts auf diesem festgehalten wird.

Die Empfindlichkeit gegenüber kurzzeitigen Flankenverschiebungen der Datenimpulse (Jitter) wird insbesondere dadurch erhöht, daß der Anfangswert des Zählers beim Eintreffen des Datenimpulses während des Endwerts und/oder des Anfangswerts auf dem normalen Anfangswert eingestellt bleibt.

Zweckmäßigerweise ist der Zähler als Dualzähler ausgebildet und ein Flipflop vorgesehen, das in Abhängigkeit vom Binärwert der höchsten verwendeten Zählstufe des Dualzählers beim Eintreffen eines Datenimpulses zurückgesetzt bzw. gesetzt wird und dessen invertierender Ausgang mit den höherwertigen Dateneingängen des Zählers verbunden ist. Es kann auch ein zweites Flipflop vorgesehen sein, das gesetzt bzw. zurückgesetzt wird, wenn gleichzeitig mit dem Datenimpuls ein Übertragsignal des Zählers auftritt und dessen invertierender Ausgang mit dem niederwertigsten Dateneingang des Zählers verbunden ist. Der Zähler wird auf den jeweiligen Anfangswert dadurch eingestellt, daß sein Übertragssignal seinem Stelleingang zugeführt wird. Beim Auftreten des Übertragssignals kann ein weiteres Flipflop gesetzt werden, das das erste und das zweite Flipflop setzt.

Um nach einer Übertragungspause die Datentakte möglichst phasenrichtig zu erzeugen, ist es vorteilhaft, wenn ein Zeitglied vorgesehen ist, das mit jedem Datenimpuls erneut ausgelöst wird und das nach einer vorgegebenen Zeitdauer nach dem Ausbleiben von Datenimpulsen den Zähler auf seinen normalen Anfangswert einstellt. Das Zeitglied ist zweckmäßigerweise als Monoflop ausgebildet.

Ein Ausführungsbeispiel des Phasenregelkreises gemäß der Erfindung wird im folgenden anhand von Zeichnungen näher erläutert. Es zeigen

FIG 1 ein Blockschaltbild des Phasenregelkreises,

FIG 2 Zeitdiagramme von Signalen an verschiedenen Punkten des in FIG 1 dargestellten Blockbildes,

FIG 3 ein Schaltbild des Phasenregelkreises und

FIG 4 ein Zeitdiagramm von Signalen an verschiedenen Punkten des in FIG 3 dargestellten Phasenregelkreises.

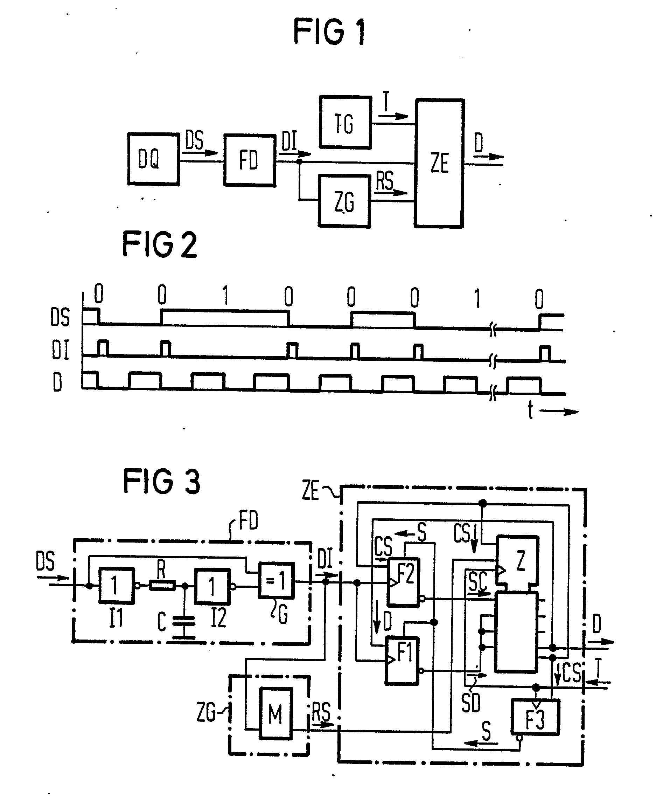

Bei dem in FIG 1 dargestellten Phasenregelkreis werden von einer Datenquelle DQ Datensignale DS abgegeben, die digitale Daten darstellen und die beispielsweise nach einem bekannten Codierungsverfahren wie dem NRZI-Verfahren codiert sind. Die Datensignale DS werden einem Flankendetektor FD zugeführt, der bei jeder Flanke eines Datensignals DS einen Datenimpuls DI erzeugt. Diese Datenimpulse DI werden einer Zählereinheit ZE zugeführt, an der auch in einem Taktgeber TG erzeugte Taktimpulse T anliegen. Die Zählereinheit ZE enthält einen Zähler, der durch die Taktimpulse T in Abhängigkeit von den Zeitpunkten, an denen jeweils ein Datenimpuls DI eintrifft, von einem veränderbaren Anfangswert bis zu einem konstanten Endwert gezählt wird und der Datentakte D abgibt, die phasenmäßig mit den Datenimpulsen DI synchronisiert sind. Weiterhin enthält der Phasenregelkreis ein Zeitglied ZG, das mit jedem Datenimpuls DI ausgelöst wird und das bei dem Ausbleiben der Datenimpulse DI nach einer vorgegebenen Zeitdauer ein Rücksetzsignal RS für die Zählereinheit ZE erzeugt.

Bei dem in FIG 2 dargestellten Zeitdiagramm ist zu erkennen, daß immer dann, wenn die Datensignale DS eine Flanke aufweisen, die Datenimpulse DI erzeugt werden. Unter der Annahme, daß jede Flanke eines Datensignals DS einem digitalen Wert 0 entspricht und das Fehlen einer Flanke zu einem vorgegebenen Zeitpunkt einem digitalen Wert 1 entspricht, ist aus FIG 2 zu erkennen, daß immer dann ein Datenimpuls DI auftritt, wenn durch die Datensignale DS ein digitaler Wert 0 dargestellt wird. Die Datentakte D ändern ihren Binärwert jeweils in der Mitte einer Bitperiode, d. h. in der Mitte zwischen den Stellen, die den digitalen Werten 0 oder 1 zugeordnet sind.

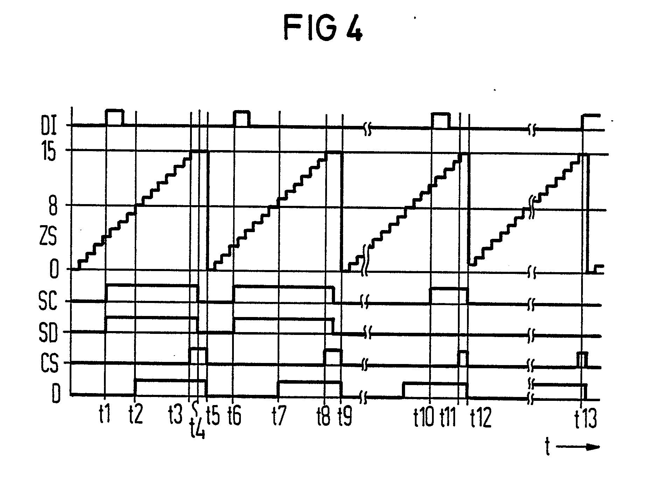

Das in FIG 3 dargestellte Schaltbild des digitalen Phasenregelkreises zeigt den Aufbau des Flankendetektors FD, der Zählereinheit ZE und des Zeitglieds ZG. Weitere Einzelheiten dieses Schaltbilds werden zusammen mit den in FIG 4 dargestellten Zeitdiagrammen beschrieben.

Der Flankendetektor FD erzeugt in an sich bekannter Weise aus den Datensignalen DS die Datenimpulse DI, wobei die Datensignale DS einerseits einem Inverter I1 und andererseits einem ersten Eingang eines Antivalenzglieds G zugeführt werden. Der Inverter I1 bildet zusammen mit einem aus einem Widerstand R und einem Kondensator C gebildeten RC-Glied und einem weiteren Inverter I2 ein Verzögerungsglied für die Datensignale und das Ausgangssignal des zweiten Inverters I2 wird einem zweiten Eingang des Antivalenzglieds G zugeführt, das die Datenimpulse DI erzeugt, deren Impulsdauer der Verzögerungszeit entspricht.

Ein Zähler Z in der Zählereinheit ZE wird durch die Taktimpulse T ständig von einem Anfangswert, normalerweise dem Anfangswert 0 bis zu einem konstanten Endwert, beispielsweise dem Endwert 15 aufwärts gezählt. In FIG 4 sind die Zählerstände ZS des Zählers Z aus Gründen der Anschaulichkeit analog dargestellt. Die Folgefrequenz der Taktimpulse T ist konstant und ein ganzzahliges Vielfaches, beispielsweise die 16fache Folgefrequenz der höchsten Folgefrequenz der Datensignale DS.

Wenn zum Zeitpunkt t1 ein Datenimpuls DI eintrifft und der Zähler Z zu diesem Zeitpunkt den Zählerstand 4 hat, weist das Ausgangssignal D der höchstwertigen Zählstufe des Zählers Z, das gleichzeitig den Datentakt D darstellt, den Binärwert 0 auf, und auch ein Übertragsignal CS des Zählers Z weist den Binärwert 0 auf, so daß zwei Flipflops F1 und F2 gesetzt werden. An ihren invertierenden Ausgängen geben die Flipflops F1 und F2 damit zum Zeitpunkt t1 Signale SD bzw. SC mit den Binärwerten 1 ab. Der Zähler Z wird weiter aufwärts gezählt und wenn er den Zählerstand 8 erreicht hat, nimmt zum Zeitpunkt t2 der am höchstwertigen Ausgang des Zählers Z abgegebene Datentakt D den Binärwert 1 an. Zum Zeitpunkt t3 erreicht der Zähler Z seinen Endwert 15 und er gibt ein Übertragssignal CS ab, das seinem Stelleingang zugeführt wird und mit dem Auftreten des Übertragsignals CS wird der Zähler Z auf einen durch die Signale SD und SC festgelegten Anfangswert eingestellt. Das Signal SC wird dem niederwertigsten Dateneingang zugeführt, während das Signal SD den drei höherwertigen Eingängen zugeführt wird. Da die Signale SC und SD zum Zeitpunkt t3 den Binärwert 1 aufweisen, wird mit dem Übertragsignal CS der Zähler Z auf den Anfangswert 15 eingestellt, d. h. er behält seinen Endwert bei, da der Datenimpuls um vier Zähleinheiten nacheilt und somit der Zählbereich verlängert werden muß, um möglichst bald eine phasenmäßige Übereinstimmung zwischen der negativen Flanke der Datentakte D und der positiven Flanke der Datenimpulse DI zu erreichen. Der Anfangswert 15 kann auch als Anfangswert -1 aufgefaßt werden. Das Übertragsignal CS wird auch einem Ladeeingang eines Flipflops F3 zugeführt, das zum Zeitpunkt t4 mit dem nächsten Taktimpuls T gesetzt wird und das an seinem invertierenden Ausgang ein Setzsignal S abgibt, das die beiden Flipflops F1 und F2 setzt.

Zum Zeitpunkt t5 nimmt mit dem nächsten Taktimpuls T der Zähler den normalen Anfangswert 0 an und damit werden auch der Datentakt D und das Übertragsignal CS beendet. Anschließend wird der Zähler Z wieder mit den Taktimpulsen T aufwärts gezählt.

Zum Zeitpunkt t6 tritt der nächste Datenimpuls DI beim Zählerstand 2 auf und in ähnlicher Weise wie zum Zeitpunkt t1 werden die beiden Flipflops F1 und F2 zurückgesetzt, so daß die Signale SD bzw. SC jeweils den Binärwert 1 annehmen. Zum Zeitpunkt t7 nimmt der Datentakt D wieder den Binärwert 1 an und zwischen den Zeitpunkten t8 und t9 wiederholen sich dieselben Vorgängen wie zwischen den Zeitpunkten t3 und t5. Durch das erneute Festhalten des Zählers in seinem Endwert wird die Phase des Datentakts D erneut um eine Einheit relativ zu den Datenimpulsen DI verschoben und diese Verschiebung erfolgt solange, bis der Datenimpuls DI beim Anfangswert 0 oder beim Endwert 15 eintrifft.

Wenn ein Datenimpuls DI, wie es zum Zeitpunkt t10 dargestellt ist, in der zweiten Hälfte des Zählbereichs auftritt, in der der Datentakt D den Binärwert 1 hat, wird das Flipflop F1 gesetzt und das Signal SD hat den Binärwert 0. Das Flipflop F2 wird zurückgesetzt und das Signal SC hat damit den Binärwert 1. Wenn zum Zeitpunkt t11 das Übertragsignal CS den Binärwert 1 annimmt, wird der Zähler Z zum Zeitpunkt t12 auf den Zählerstand 1 eingestellt. Gleichzeitig werden durch das Setzsignal S die Flipflops F1 und F2 gesetzt. Durch das Einstellen des Zählerstands auf den Anfangswert 1 wird der Zählbereich verkürzt und die Phase der Datentakte D wird dahingehend verschoben, daß nach mehreren Zählperioden die Datenimpulse möglichst beim Endwert oder beim Anfangswert des Zählers Z eintreffen.

Zum Zeitpunkt t13 wird angenommen, daß in einem eingephasten Zustand ein Datenimpuls beim Endwert 15 eintrifft. Das Übertragsignal CS und der Datentakt D haben zu diesem Zeitpunkt den Binärwert 1, so daß die Flipflops F1 und F2 gesetzt werden und die Signale SD und SC den Binärwert 0 haben. Damit wird der Zähler anschließend auf den normalen Anfangswert 0 zurückgesetzt und wenn die Datenimpulse DI keine Frequenzabweichung aufweisen, trifft der nächste Datenimpuls DI ebenfalls beim Endwert 15 ein, so daß die positiven Flanken der Datenimpulse DI und die negativen Flanken der Datentakte D gleichzeitig auftreten.

Wenn aufgrund der Codierung der Datensignale DS infolge der Binärwerte 1 der Daten einzelne Datenimpulse DI fehlen, zählt der Zähler Z jeweils bis zu seinem Endwert 15 und anschließend wieder von seinem normalen Anfangswert 0 bis zum Endwert und zwar solange, bis wieder ein Datenimpuls DI eintrifft und gegebenenfalls den Anfangswert verstellt.

Wenn eine Unterbrechung der Übertragung der Datensignale DS stattfindet, stellt das Zeitglied ZG diese Unterbrechung fest und erzeugt ein Rücksetzsignal RS, das den Zähler Z auf seinem Anfangswert 0 festhält. Das Zeitglied Z ist beispielsweise als wiedertriggerbares Monoflop M ausgebildet, das mit jedem Datenimpuls DI ausgelöst wird und das nach dem Fehlen einer vorgegebenen Anzahl von aufeinanderfolgenden Datenimpulsen DI in seine stabile Lage zurückkippt und das Rücksetzsignal RS erzeugt. Das Zeitglied ZG kann auch als Zähler ausgebildet sein, der mit jedem Datenimpuls DI zurückgesetzt wird und der beim Erreichen eines vorgegebenen Zählerstands, der einer vorgegebenen Anzahl von fehlenden Datenimpulsen DI entspricht, das Rücksetzsignal RS erzeugt. Wenn nach dem Auftreten des Rücksetzsignals RS wieder ein Datenimpuls DI eintrifft, wird nach dem nächsten Erreichen des Endwerts 15 der Anfangswert 0 nicht verstellt, da durch das Rücksetzsignal R1 die beiden Flipflops F1 und F2 zurückgesetzt bleiben und falls keine Frequenzabweichung der Datenimpulse DI auftritt, trifft der nächstfolgende Datenimpuls wieder beim Zählerstand 0 ein, d. h. der Phasenregelkreis ist von Anfang an richtig eingephast.

Anstelle der Aufwärtszählung kann auch eine Abwärtszählung des Zählers Z vorgenommen werden und es ist auch möglich, anstelle des Datentakts D je nach der gewünschten Phasenlage zwischen den Datenimpulsen DI und den Datentakten D ein anderes Ausgangssignal des Zählers Z zu verwenden.

Dadurch, daß der Anfangswert nicht verstellt wird, wenn die Datenimpulse DI bei dem Endwert 15 oder dem Anfangswert 0 eintreffen, weist der digitale Phasenregelkreis eine Unempfindlichkeit gegenüber kurzzeitigen Flankenverschiebungen (Jitter) der Datenimpulse DI auf.

## Ansprüche

1. Digitaler Phasenregelkreis zum Erzeugen von Datentakten, die phasenstarr mit Datenimpulsen synchronisiert sind, wobei ein Zähler vorgesehen ist, der durch Taktimpulse konstanter Folgefrequenz jeweils von einem Anfangswert bis zu einem Endwert gezählt wird und wobei der zwischen dem Anfangswert und dem Endwert liegende Zählbereich in Abhängigkeit von dem Zählerstand des Zählers beim Eintreffen jedes Datenimpulses veränderbar ist, dadurch gekennzeichnet, daß der Zähler (Z) in Abhängigkeit davon, ob ein Datenimpuls (DI) in der ersten bzw. zweiten Hälfte des Zählbereichs eingetroffen ist, beim Erreichen seines konstanten Endwerts auf einen gegenüber seinem normalen Anfangswert veränderten Anfangswert, mit dem der Zählbereich verlängerbar bzw. verkürzbar ist, einstellbar ist.

2. Digitaler Phasenregelkreis nach Anspruch 1, dadurch gekennzeichnet, daß der Zähler (Z) beim Eintreffen eines Datenimpulses (DI) beim Anfangswert und/oder beim Endwert nach dem Erreichen seines Endwerts auf seinen normalen Anfangswert eingestellt wird.

3. Digitaler Phasenregelkreis nach Anspruch 1 oder Anspruch 2, dadurch gekennzeichnet, daß der Zähler (Z) auf einen Anfangswert einstellbar ist, der maximal um eine Zähleinheit vom normalen Anfangswert abweicht.

4. Digitaler Phasenregelkreis nach einem der Ansprüche 1 bis 3, **dadurch gekennzeichnet,** daß der Zähler (Z) beim Erreichen seines Endwerts zur Verlängerung des Zählbereichs auf seinem Endwert kurzzeitig festgehalten wird.

5. Digitaler Phasenregelkreis nach einem der Ansprüche 1 bis 4, **dadurch gekennzeichnet,** daß der Zähler (Z) von einem veränderbaren Anfangswert bis zu einem konstanten Endwert aufwärts zählbar ist und daß sein Anfangswert entweder auf den Endwert, den normalen Anfangswert oder auf den um eine Einheit erhöhten Anfangswert einstellbar ist.

6. Digitaler Phasenregelkreis nach einem der Ansprüche 1 bis 5, **dadurch gekennzeichnet,** daß der Zähler (Z) als Dualzähler ausgebildet ist und daß ein erstes Flipflop (F1) vorgesehen ist, das in Abhängigkeit vom Binärwert der höchsten verwendeten Zählstufe des Zählers (Z) beim Eintreffen eines Datenimpulses (DI) zurückgesetzt bzw. gesetzt wird und dessen invertierender Ausgang mit den höherwertigen Dateneingängen des Zählers (Z) verbunden ist.

7. Digitaler Phasenregelkreis nach Anspruch 6, **dadurch gekennzeichnet,** daß ein zweites Flipflop (F2) vorgesehen ist, das in Abhängigkeit von einem gleichzeitig mit dem Datenimpuls (DI) auftretenden Übertragsignal (CS) des Zählers (Z) gesetzt bzw. zurückgesetzt wird und dessen invertierender Ausgang mit dem niederwertigsten Dateneingang des Zählers (Z) verbunden ist.

8. Digitaler Phasenregelkreis nach einem der Ansprüche 1 bis 7, **dadurch gekennzeichnet,** daß ein weiteres Flipflop (F3) vorgesehen ist, das gesetzt wird, wenn das Übertragsignal (CS) auftritt und das das erste und das zweite Flipflop (F1, F2) setzt.

9. Digitaler Phasenregelkreis nach einem der Ansprüche 1 bis 8, **dadurch gekennzeichnet,** daß einem Stelleingang des Zählers (Z) ein von ihm beim Erreichen eines Endwerts abgegebenes Übertragsignal (CS) zugeführt wird.

10. Digitaler Phasenregelkreis nach einem der Ansprüche 1 bis 9, **dadurch gekennzeichnet,** daß ein Zeitglied (ZG) vorgesehen ist, das mit jedem Datenimpuls (DI) erneut ausgelöst wird und das nach einer vorgegebenen Zeitdauer nach dem Ausbleiben von Datenimpulsen (DI) den Zähler auf seinen normalen Anfangswert einstellt.

# FIG 1

# FIG 2

# FIG 3

# FIG 4